# EUROPEAN PATENT APPLICATION

(11) **EP 0 997 176 A2**
(43) Date of publication of application: **03.05.2000**
(21) Application number: 99203369.6
(22) Date of filing: 14.10.1999
(51) Int. Cl.: A63G 31/16

(54) **Robotised virtual reality motion simulator-II**

(30) Priority: 28.10.1998 EP 98203647
(71) Applicant: Peripherals N.V., 2970 Schilde (BE)
(72) Inventor: Collignon, Patrick, 2970 Schilde (BE)

(57) **Abstract**

A robotised motion simulator for amusement rides, flight simulators or any other form of motion system used for example for virtual reality experiences offering a more flexible and versatile simulation system.

The system consists out of an industrial robot used as programmable controlled arm to manipulate and move a user holding frame in a much larger space envelope and with more degrees of freedom than existing motion systems based on movable platforms.

The user holding frame is moved by a robot through a sequence of motions, synchronized with the image of a visual display system.

The use of industrial robots for the application offers the potential to make the rides more personalized, more realistic and provides construction and control at much lower cost.
The standard controls of an industrial robot will allow for a highly simplifief interactive motion control system

## Description

### BACKGROUND OF THE INVENTION

This invention relates to an improved motion simulator device, and to amusement ride devices that combine both visual effects and motion of the user/passenger to obtain an overall effect as realistic as possible.

These motion systems move users or passengers over short distances in different directions, in synchronism with the motion picture, so they experience forces similar to those of the people in the motion picture.

Over the years, there have been a number of proposals for motion systems based on support platforms used in theatrical environment. Examples of such patents are provided by PCT/AU89/00124 and PCT/US86/02763, PCT/WO87/03816, PCT/W089/09086, US/4.584.896, US/5.791.903.
In these examples, a platform intended to support a number of people in a theater complex is able to be tilted in at least some directions. The movements are generated either by means of hydraulic cylinders or by means of mechanical levers.
The resultant motion is intended to subject passengers to forces similar to those of passengers in a motion picture image, which provides enhanced entertainment.

The above mentioned constructions consist out of a platform ( onto which seats are attached ) tilted or moved by means of hydraulic actuators or flexible cables. These constructions limit the different amount of movements that can be generated and these movements are limited in range, due to the fixed mounting base.

### DESCRIPTION OF THE PREFERRED EMBODIMENT

In search for more realistic and versatile movements to increase the enhanced entertainment or training effect ( flight simulators ) the volume ( space envelope) in which the motion is generated must be enlarged, together with the degrees of freedom of the motion that must be increased.

The biggest technical constraint with the existing simulator platforms is the fixation of the passenger holding platform with the seats to a fixed base through cylinders or mechanical levers.
The current motion systems have unique and specific mechanical and control designs, which makes the overall product expensive.

The present invention seeks to provide an improved motion simulator and, at least in a preferred form, offer a higher level of control flexibility, more realistic motion patterns (like full rolls ) in a larger space envelope and at much lower product cost.

The invention uses the control flexibility of standard industrial robots and their degrees of freedom to move a user-holding frame through a motion program.

The preferred embodiment consists out of a user-holding frame that is attached to the mounting flange of the wrist of the industrial robot.

The users or passengers that want to experience the ride, take place in the user-holding frame. This frame offers seats including safety devices (restraints ) to protect the users during the ride.

The users either wear a head-set that includes visual display or face a screen onto which a picture is projected.

The user-holding frame can be shaped in any physical form, depending on the attraction or application.
Given the mechanical payload of the industrial robot, the user-holding frame can hold more than one seat.
The control system of an industrial robot allows unlimited flexibility and real time control alterations by the user offering different and personalized rides adjusted to each individual.
Virtual reality applications require these real time motion alterations at low product cost.

Depending on the physical configuration of the preferred embodiment in its way it is attached to the robotwrist, the user holding frame can make full roll, pitch or yaw motions.

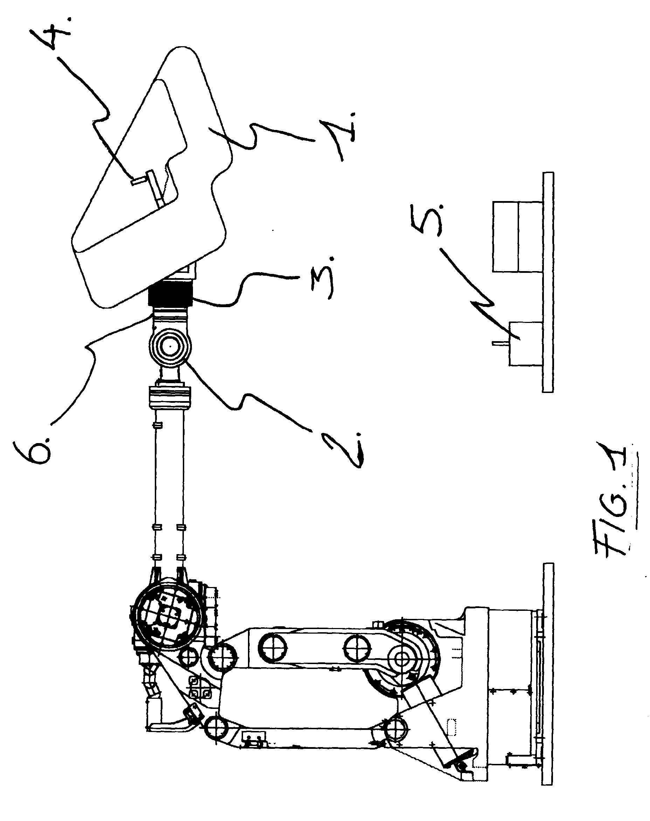

Fig. 1 shows an example of a design for the set up of an industrial robot with a user-holding frame. The user-holding frame is equipped with one seat. In the way the user-holding frame (1) is attached to the robot wrist ( 2 ) three dimensional motion is possible and the user/passenger can be subjected to full roll motion.

A load sensing device ( 3 ) is installed between robotwrist and user-holding frame to prevent dynamical overload on the mechanical arm or protect the user or environment against collision.
The user-holding frame is equipped with a dead-man-switch (4 ) to protect the user/passenger in case of emergency. If the user releases the dead-man-switch the robot goes into emergency stop.
The user-holding frame is equipped with a docking device, which is used as mechanical fixation when the robot returns to its home position ( 5 ). User/passengers can step in and out under a safe and mechanical stable situation.

Different ride programs can easily be stored in the robot controllers memory and can be instantly selected by the user. Different parameter settings, like acceleration or speed, personalizes the experience of each individual ride.

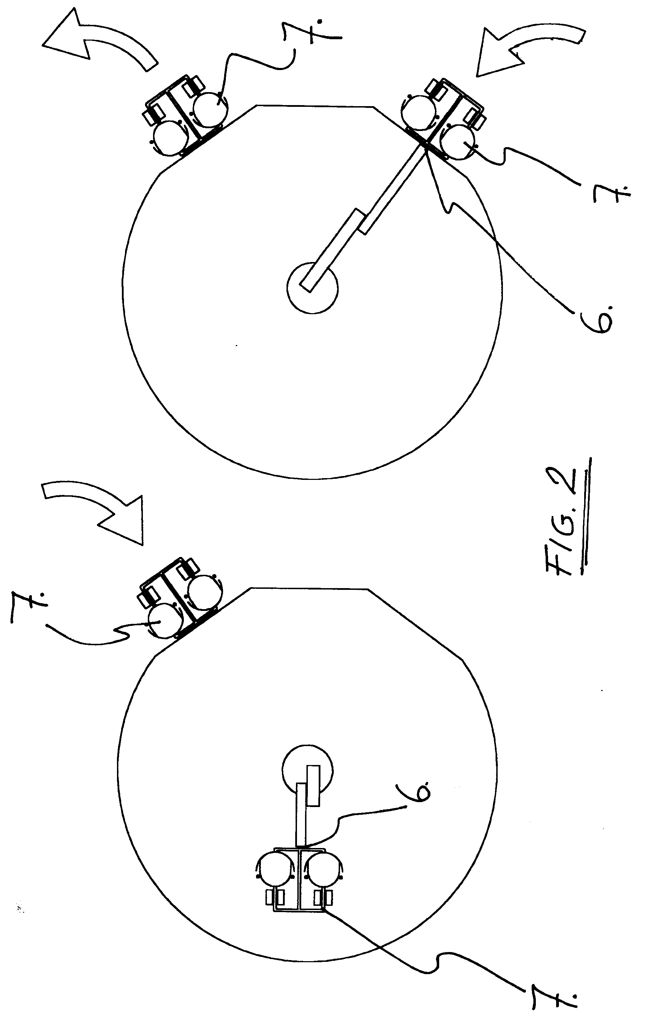

Fig. 2 shows a set-up with multiple user-holding frames (7).
For entertainment purposes, it is important to achieve a high utilization level of the equipment.
The multiple user-holding frames and the robot are equiped with a quick change device. Fig. 1 shows the location of such a quick change device (6 ).
With the quick change device, the robot can detach the user-holding frame in its docking station Fig. 1 ( 5 ). In this set-up, the user/passengers can step in and out of the user-hoding frame, while the robot performs the motion simulation with another user-holding frame.
Several of such user-holding frames can be engineered to increase the utilization level.

## Claims

1. A motion simulator apparatus, using an industrial robot for the generation of a motion pattern synchronized with a visual display system; comprising an industrial robot, a user-holding frame attached to the robotwrist which can accomodate passengers and head mounted visual display systems to view a picture.

2. An apparatus according to claim 1, wherein a quick change device is incorporated for fast exchange of multiple user-holding frames, each to be placed in docking stations.

3. A motion simulator apparatus comprising multiple industrial robots to hold a larger user-holding frame with multiple seats.

4. An apparatus according to claim 1 or claim 3, wherein a load safety system or anti-collision device is installed between the robot(s) and the user-holding frame.

5. An apparatus according to claim 1 or claim 3, wherein different effects are incorporated in the user-holding frame, such as to simulate wind velocity ( air nozzles or blowers ) or humidity ( spray of water) and sound.

6. An apparatus according to claim 1 or claim 3, wherein a steering device such as a joy stick is installed to control robot motion.

7. An apparatus according to claim 1 or claim 3, wherein the axis of the user-holding frame is installed in line with the roll axis of the robotwrist giving opportunity for full roll motion.

8. An apparatus according to claim 1 or claim 3, wherein the roll axis of the robotwrist is installed perpendicular to the axis of the user-holding frame giving opportunity for full yaw motion.

9. An apparatus according to claim 1 or claim 3, wherein the roll axis of the robotwrist is installed sideways to the axis of the user-holding frame giving opportunity for full pitch motion.
